# EUROPEAN PATENT APPLICATION

(11) **EP 2 889 725 A1**
(43) Date of publication of application: **01.07.2015**
(21) Application number: 14198795.8
(22) Date of filing: 18.12.2014
(51) Int. Cl.: G06F 3/01, G06F 1/16

(54) **Distributed control architecture for haptic devices**

(30) Priority: 29.12.2013 US 201314142920
(71) Applicant: Immersion Corporation, San Jose, CA 95134 (US)
(72) Inventor: Grant, Danny, Laval Québec H7M 2A1 (CA); Lacroix, Robert, San Jose California 95124 (US)
(74) Representative: Hofstetter, Schurack & Partner

(57) **Abstract**

A widely distributed control architecture for haptic devices is provided. In one embodiment, an architecture of a device or peripheral has a main communication and control processor (e.g. a host or device processor), and each actuator also has a dedicated processor. A device can have a single or multiple actuators all of the same type or of different types. In another embodiment, individual processors for actuators are provided without a separate coordinating processor.

## Description

### BACKGROUND

Electronic device manufacturers strive to produce a rich interface for users. Conventional devices use visual and auditory cues to provide feedback to a user. In some interface devices, kinesthetic feedback (such as active and resistive force feedback) and/or tactile feedback (such as vibration, texture, and heat) is also provided to the user, more generally known collectively as "haptic feedback" or "haptic effects". Haptic feedback can provide cues that enhance and simplify the user interface. Specifically, vibration effects, or vibrotactile haptic effects, may be useful in providing cues to users of electronic devices to alert the user to specific events, or provide realistic feedback to create greater sensory immersion within a simulated or virtual environment.

In order to generate haptic effects, many devices utilize some type of actuator or haptic effect output device. Typically, these haptic effect output devices have provided a vibration or vibrotactile effect. To produce these effects, some form of control is also necessary, and this typically has involved a controller for a set of haptic effect output devices.

However, traditional architectures that provide haptic effects are potentially limited by processor constraints. As system haptic feedback to users becomes more complex, it may be useful in enhancing user experience to provide better processing power for control of haptic effects.

Therefore, there is a need for an improved system of providing a haptic effect that includes more processors for haptic effect output devices. There is a further need for providing haptic feedback in a coordinated manner among various haptic effect output devices.

### SUMMARY

The present invention is directed to a haptic enabled apparatus as defined in independent claim 1. Further embodiments of the inventive apparatus are specified in the claims dependent on claim 1.

In an embodiment, a haptic effect enabled apparatus is provided. The apparatus includes a plurality of haptic output devices. The apparatus also includes a plurality of controllers. The plurality of controllers have one controller for each haptic output device of the plurality of haptic output devices. Each controller of the plurality of controllers is associated with a single haptic output device of the plurality of haptic output devices.

In another embodiment, a haptic effect enabled apparatus is provided. The apparatus includes a first haptic output device and a first controller associated exclusively with the first haptic output device. The first controller is coupled to the first haptic output device and controls the first haptic output device. The apparatus further includes a second haptic output device and a second controller associated exclusively with the second haptic output device. The second controller is coupled to the second haptic output device and controls the second haptic output device. A third haptic output device and a third controller associated exclusively with the third haptic output device are also provided in the apparatus. The third controller is coupled to the third haptic output device and controls the third haptic output device.

In yet another embodiment, a haptic effect enabled apparatus is provided. The apparatus includes a first haptic output device. The apparatus also includes a first controller associated exclusively with the first haptic output device. The first controller is coupled to the first haptic output device and controls the first haptic output device. The apparatus further includes a second haptic output device. The apparatus includes a second controller associated exclusively with the second haptic output device. The second controller is coupled to the second haptic output device and controls the second haptic output device. Also, the apparatus includes a third haptic output device. The apparatus includes a third controller associated exclusively with the third haptic output device. The third controller is coupled to the third haptic output device and controls the third haptic output device. Additionally, the apparatus includes a fourth haptic output device. The apparatus also includes a fourth controller associated exclusively with the fourth haptic output device. The fourth controller is coupled to the fourth haptic output device and controls the fourth haptic output device. Moreover, the apparatus includes a fifth haptic output device. Further, the apparatus includes a fifth controller associated exclusively with the fifth haptic output device. The fifth controller is coupled to the fifth haptic output device and controls the fifth haptic output device. The apparatus also includes a coordinating controller. The coordinating controller is coupled to the first controller, the second controller, the third controller, the fourth controller and the fifth controller. The apparatus further includes an external communications interface coupled to the coordinating controller.

The present invention is further directed to a method of producing multiple haptic effects in a haptic effect enabled device as defined in independent claim 11. Further embodiments of the inventive method are specified in the claims dependent on claim 11.

In an embodiment, a method of producing multiple haptic effects in a haptic effect enabled device is provided. A first controller of a plurality of controllers receives a command to enable a first haptic output device of a plurality of haptic output devices. The first haptic output device is connected to the first controller. The first haptic output device produces a haptic effect responsive to the first controller. A second controller of the plurality of controllers receives a command to enable a second haptic output device of the plurality of haptic output devices. The second haptic output device is connected to the second controller. The second haptic output device produces a haptic effect responsive to the second controller.

In yet another embodiment, a method of producing multiple haptic effects in a haptic effect enabled device is provided. A first controller receives a command to enable a first haptic output device. The first haptic output device is connected to the first controller. The first haptic output device produces a haptic effect responsive to the first controller. A second controller receives a command to enable a second haptic output device. The second haptic output device is connected to the second controller. The second haptic output device produces a haptic effect responsive to the second controller. A third controller receives a command to enable a third haptic output device. The third haptic output device is connected to the third controller. The third haptic output device produces a haptic effect responsive to the third controller.

### BRIEF DESCRIPTION OF THE DRAWINGS

The present invention is illustrated by way of example in the accompanying drawings. The drawings should be understood as illustrative rather than limiting.
Figure 1 illustrates an embodiment of an apparatus with haptic effect outputs.
Figure 2 illustrates an embodiment of an apparatus with haptic effect output devices with independent controllers.
Figure 3 illustrates an embodiment of an apparatus with haptic effect output devices with independent controllers.
Figure 4 illustrates an embodiment of an apparatus with haptic effect output devices with a shared communications interface.
Figure 5 illustrates an embodiment of an apparatus with haptic effect output devices with independent controllers and peer-to-peer controller connectivity.
Figure 6 illustrates an embodiment of an apparatus with haptic effect output devices and sensors with independent controllers.
Figure 7 illustrates an embodiment of an apparatus with haptic effect output devices with independent controllers.
Figure 8 illustrates an embodiment of a gaming controller.
Figure 9 illustrates an embodiment of a gun-shaped controller.
Figure 10 illustrates an embodiment of a wearable device with haptic effects.
Figure 11 illustrates an embodiment of a tablet.
Figure 12 illustrates an embodiment of a process of operating haptic effect output devices with dedicated processors.

### DETAILED DESCRIPTION

A system, method and apparatus is provided for a distributed control architecture for haptic devices. The specific embodiments described in this document represent exemplary instances of the present invention, and are illustrative in nature rather than restrictive.

In the following description, for purposes of explanation, numerous specific details are set forth in order to provide a thorough understanding of the invention. It will be apparent, however, to one skilled in the art that the invention can be practiced without these specific details. In other instances, structures and devices are shown in block diagram form in order to avoid obscuring the invention.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment, nor are separate or alternative embodiments mutually exclusive of other embodiments.

Basic function microcontrollers continue to decline in price. Given the low cost of these basic microcontrollers a widely distributed control architecture can be used for haptic devices. In one embodiment, an architecture of a device or peripheral has a main communication and control processor (e.g. a host or device processor), and each actuator also has a dedicated processor. A device can have a single or multiple actuators all of the same type or of different types. In another embodiment, individual processors for actuators are provided without a separate coordinating processor.

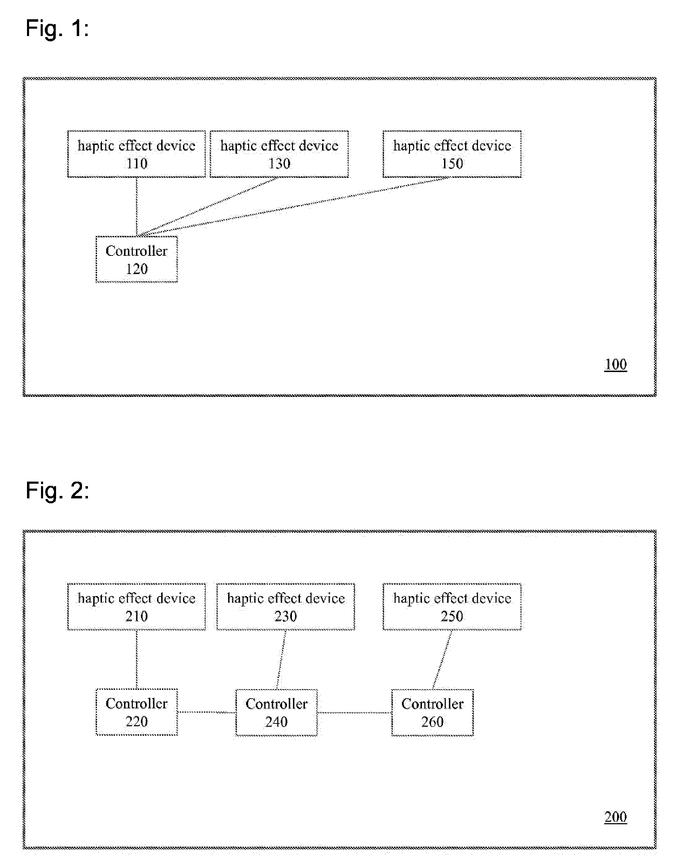

Figure 1 illustrates an embodiment of an apparatus with haptic effect outputs. In a conventional apparatus for haptic effects, a controller may be linked to and control any number of haptic effect output devices. Historically, this makes sense from budgetary constraint reasons, both in terms of fiscal costs and resource costs such as device or circuit board real estate or heat dissipation. Thus, as illustrated, apparatus 100 provides three haptic effect output devices linked to a single controller. Haptic effect output device 110, haptic effect output device 130 and haptic effect output device 150 are each controlled by controller 120.

Controller 120 sets up operating parameters, monitors devices 110, 130 and 150, and activates and deactivates devices 110, 130 and 150. Controller 120 has a lot to do. This can lead to problems in terms of scheduling multiple devices, fine-grained control of multiple devices, and differentiation of multiple devices. For example, controller 120 may be limited in how rapidly it can switch on and off each of devices 110, 130 and 150 when multiple devices are providing haptic effects at essentially the same time.

In contrast, one can provide an architecture where multiple controllers are provided for multiple haptic effect output devices. In particular, one can provide an individual controller for each haptic effect output device. In other words, each haptic effect output device can have an independent controller for that device.

Figure 2 illustrates an embodiment of an apparatus with haptic effect output devices with independent controllers. Apparatus 200 provides three internal haptic effect output devices, 210, 230 and 250. Controllers 220, 240 and 260, respectively, each control a single haptic effect output device 210, 230 or 250. Thus, each controller can operate independent of the other controllers, and provide dedicated control of the corresponding haptic effect output device.

Note that, for purposes of this document, a controller or processor can refer to, for example, a microprocessor, a microcontroller, or another component capable of controlling a haptic effect output device. As illustrated in Figure 2, each of controllers 220, 240 and 260 are each linked to at least one of the other controllers, providing for controller-to-controller communication. This peer-to-peer connectivity can allow for coordination of multiple haptic effect output devices controlled by independent controllers.

Haptic effect output devices can take on various different forms. This includes an eccentric rotating mass, linear resonant actuator, a piezoelectric material, an electro-active polymer, a shape memory alloy, an electrostatic friction device, an ultrasonic surface friction device, an ultrasonic haptic transducer, a combination of a haptic substrate and a deformable surface, or an air jet. Other haptic effect output devices may also be used.

An actuator specific controller can be used for several functions. This may include communicating set-up information to a main or coordinating controller. This may also include handling the communication from the host or device controller to the actuator. Additionally, this may include providing basic controller commands that are actuator specific, such as a specific type of drive signal or specific features such as resonant frequencies or braking, for example.

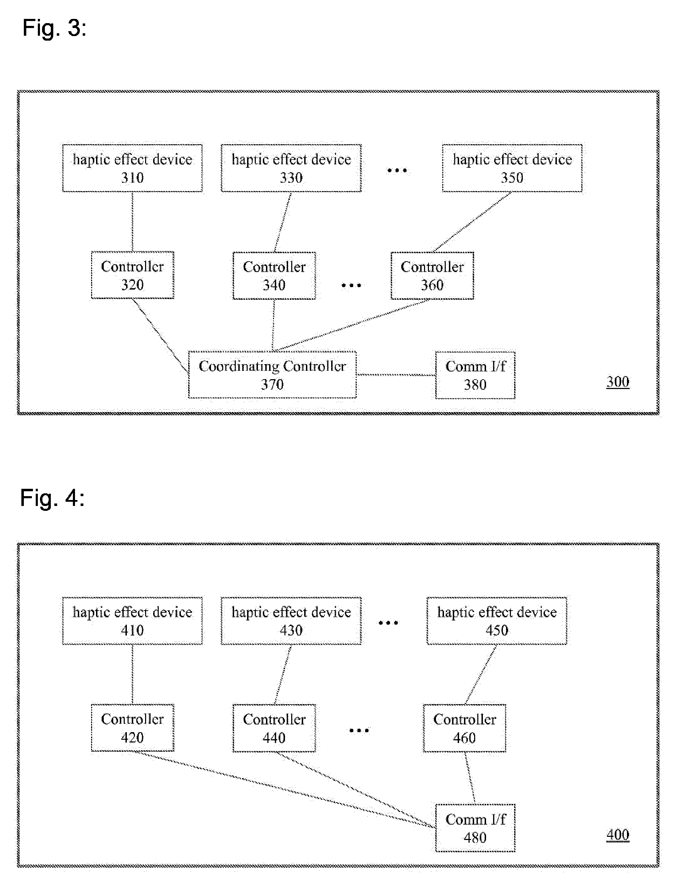

While peer-to-peer connectivity may be desirable in some instances, adding a coordinating controller may also be desirable in other instances. Figure 3 illustrates another embodiment of an apparatus with haptic effect output devices with independent controllers. Device 300 is illustrated with at least three haptic effect output devices 310, 330 and 350. For each haptic effect output device, a corresponding controller, 320, 340 and 360 links specifically to the corresponding haptic effect output device. Moreover, a coordinating controller 370 links to controllers 320, 340 and 360. Additionally, communications interface 380 is provided with a linkage or coupling to the coordinating controller 370.

Coordinating controller 370 provides overall coordination of the haptic effect output devices of device 300. Device 300 may have more than the three illustrated haptic effect output devices, and would be expected to have a corresponding controller for each haptic effect output device. Thus, coordinating controller 370 can be used to make sure that each controller for a specific haptic effect output device has appropriate instructions which can be executed to control the corresponding haptic effect output device. Communications interface 380 allows for communication and coronation with an external device or system. In some embodiments, each of controllers 320, 340 and 360 are coupled with and exclusively control a single corresponding haptic effect output device 310, 330 and 350 as shown.

Such distributed control potentially allows for an architecture that results in abstraction of the actuator types and properties. The dedicated controller for an actuator may handle the specific aspects of the specific actuator it is controlling. This may relate to a type of haptic effect of the actuator (e.g. vibration, deformation, ESF, etc.) or performance characteristics of the actuator, for example. A potential benefit of this type of architecture is that it simplifies haptic effect output device control for an application or upstream system attempting to control multiple actuator types. Moreover, the main controller potentially has less of a processing load. This also allows for specification of a lower cost main controller in some instances. Additionally, it may make it easier to design haptic devices with multiple actuators and multiple actuator types.

In one embodiment, an actuator-dedicated controller for each actuator 1) defines and sets a specific address for the actuator; 2) handles communication from the host or device controller to the actuator; and 3) provides basic controller commands that are actuator, such as a specific type of drive signal or specific features such as resonant frequencies or braking, for example.

For example a mobile device may feature four vibrotactile actuators on the top, bottom and sides of the device as well as two deformation actuators on the sides of the device. In such an architecture, the device may feature a main host processor running the main application and six low cost dedicated controllers controlling the respective actuators. Each dedicated controller may have a pre-defined address in ROM, and the main processor may have the dedicated controller addresses in its program as well, for example.

Alternatively the main processor may allow for a variable actuator configuration. For example, the main processor broadcasts a report address message (or similar command) to all dedicated controllers, and each dedicated controller waits a random amount of time before reporting its address. To complete the process, the hardware detects or avoids collisions due to two or more dedicated controllers attempting to communicate at the same time, and each dedicated controller retries waiting a random amount of time and reporting its address until successful. Other variations may be used. In embodiments with relatively few controllers, such an approach may work better, whereas embodiments with a larger number of controllers may require a more structured or predictable process, for example.

If an application calls for a specific haptic effect, a main controller may choose a specific actuator to produce the effect via an address for a dedicated controller for the specific actuator. For example a vibration effect could be called by the application to alert a user that he has more than 10 unread messages. The application would direct a 'HIGH ALERT' notification message (for example) to a specific actuator. For example, the actuator located at the top of the device may be selected for such an alert. Alternatively, the actuator located at the top of a device based on current orientation may be selected for such an alert. In yet another circumstance, an actuator and corresponding controller may be selected based on characteristics such as actuator output characteristics or current functionality, such as if the actuator reports it is currently working, unlike other disabled or failing actuators. The application or the main controller may store some information that it receives from the dedicated controller as to the location of the actuator, the type of actuator, or other performance characteristics of the actuator, although this may not be required.

The dedicated actuator controller would receive the 'HIGH ALERT' notification and given the type and known performance of the actuator, cause the actuator to output the strongest haptic effect that this actuator is capable of producing. Note that in this embodiment the actuator-dedicated controller determines the specific drive signals of the actuator which can vary greatly depending on the actuator type and performance levels. Alternatively the application could broadcast a specific haptic effect to all of the actuators and only those actuators capable of playing the haptic effect will respond.

One potential advantage of this architecture is that the actuator types and performance of the actuator can be abstracted from the application. For example an application may run on a first device that has only standard definition vibration actuators and a second device that has deformation actuators. In this case the application can make similar haptic effect calls and the actuator dedicated controller will handle the specific control signals for the specific associated actuator type, such as time varying signals for a vibration actuator or DC force for a deformation device.

In some instances, a coordinating controller may not be necessary. For example, it may be useful to have multiple controllers which are accessible through a single communications interface. Figure 4 illustrates yet another embodiment of an apparatus with haptic effect output devices with a shared communications interface. Device 400 includes at least three haptic effect output devices illustrated as devices 410, 430 and 450. As with device 300, each haptic effect output device of device 400, has a corresponding controller 420, 440 and 460. Also, as with device 300, more than three haptic effect output devices may be provided in device 400, each of which would have a corresponding independent controller. A communications interface 480 is provided which is linked to each of controllers 420, 440 and 460 directly, and may be linked directly to any other additional controllers not shown.

In some embodiments, controllers 420, 440 and 460 are directly accessible or addressable through communications interface 480 by an external device or system. This allows an external device or system to control and coordinate haptic effects in device 400 by accessing each of controllers 420, 440 and 460 individually. Additionally, in some embodiments, each of controllers 420, 440 and 460 can communicate with other controllers of device 400 through communications interface 480. This communications functionality is enabled along with external communications functionality through communications interface 480.

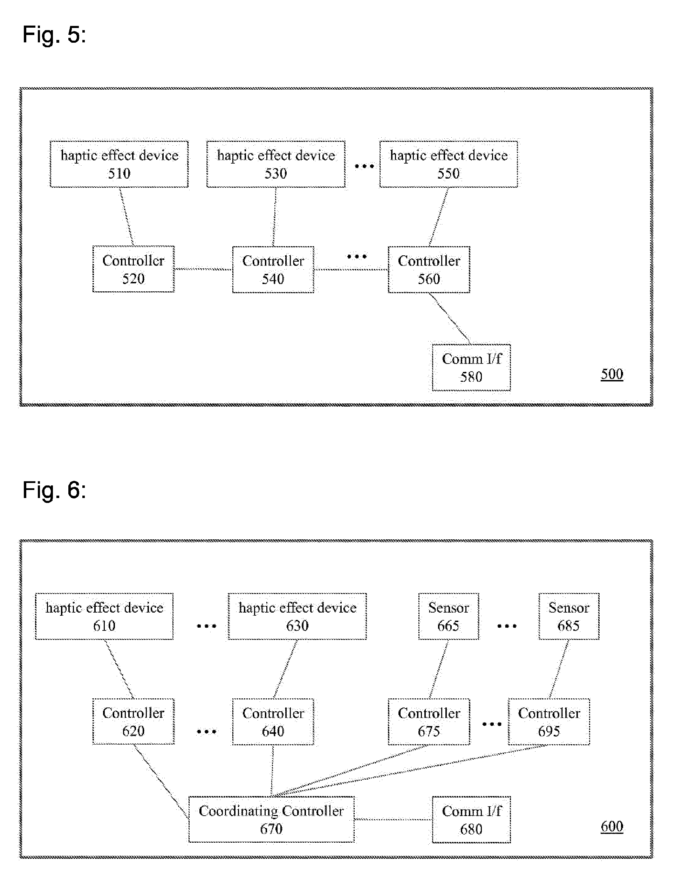

Other architectures may also be useful in devices with a dedicated controller for each haptic output effect device. Figure 5 illustrates another embodiment of an apparatus with haptic effect output devices with independent controllers and peer-to-peer controller connectivity. Device 500 uses at least three haptic effect output devices illustrated as devices 510, 530 and 550. Controllers 520, 540 and 560 each link to a single haptic effect output device. Controllers 520, 540 and 560 also link in a peer-to-peer connection, which may or may not have a circular linkage. Furthermore, communications interface 580 is illustrated as linked to controller 560. Thus, controller 520, controller 540, controller 560 and any other controllers linked thereto can communicate through the peer-to-peer connections and through communications interface 580 with external devices or systems. The linkage (peer-to-peer) between controllers 520, 540 and 560 may be controlled in a variety of ways, such as through a token-ring style communications protocol. Moreover, as is clear from Figure 5, additional haptic effect output devices and corresponding controllers may be included in device 500.

In another embodiment a dedicated actuator controller may receive local sensor information related to the function or placement of the actuator. For example for a deformation actuator the applied pressure on the specific actuator may be processed and used in the haptic rendering of the actuator. Alternatively a processed sensor signal may also be sent back to a main controller.

While sensors may be included in all of the devices of Figures 2-5, it may be useful to further illustrate this in a specific example. Figure 6 illustrates an embodiment of an apparatus with haptic effect output devices and sensors with independent controllers. Device 600 includes haptic effect output devices 610 through 630. Controllers 620 through 640 correspond to haptic effect output devices 610 through 630. Also illustrated are sensors 665 through 685 and corresponding controllers 675 through 695. A coordinating controller 670 links to all the other controllers (620 through 640 and 675 through 695). Additionally, communications interface 680 links to coordinating controller 670 and provides communications with external devices and systems.

Thus, device 600 can sense inputs with various sensors, which may be controlled by individual controllers and respond to these inputs using the various haptic effect output devices which are also controlled by individual controllers. Some of this response may be further coordinated or dictated by an upstream controller or controlling process communicating with coordinating controller 670 using communications interface 680, for example. Moreover, in an alternate embodiment, coordinating controller 670 may be eliminated, and individual controllers for haptic effect output devices and sensors may be linked either in a peer-to-peer fashion or directly to communications interface 680. Controllers for sensors may collect and transform input data from sensors, monitor sensor performance, adjust sensor operation such as adjusting internal gain of the sensor, or enable and disable sensors, for example.

Moreover, in some embodiments, sensors may not have dedicated controllers. In such embodiments, sensors may work with controllers of haptic effect output devices. In other such embodiments, sensors may operate with a separate controller dedicated to one or more sensors, or with a main or coordinating controller, for example.

In various embodiments, the haptic effect information going from the main controller to the dedicated controller can be an index for a stored effect in a library; a parameterized haptic effect such as a magnitude, wave shape, or frequency; or an abstract command language, such as 'High Alert' , 'Soft Alert' etc. for example. Similarly, data incoming from a sensor may be in raw form, parameterized through interpretation by a controller, scaled, or transformed into a message such as down, up, or other messages, for example. Thus, various architectures and arrangements may be provided, using levels of abstraction appropriate for particular applications, for example.

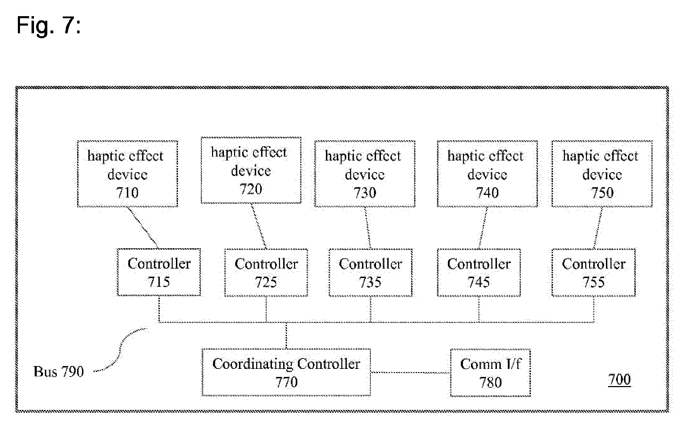

Yet other architectures may also be useful. Figure 7 illustrates another embodiment of an apparatus with haptic effect output devices with independent controllers. Device 700 includes five haptic effect output devices 710, 720, 730, 740 and 750. Corresponding controllers 715, 725, 735, 745 and 755 each connect to one of the haptic effect output devices, respectively. A coordinating controller 770 uses bus 790 to communicate with each of controllers 715, 725, 735, 745 and 755. Coordinating controller 770 also uses communications interface 780 to communicate with external devices and systems. Use of bus 790 contrasts with other architectures which may use a point-to-point or peer-to-peer based connection. The additional haptic effect output devices allow for richer or potentially more fine-grained generation of haptic effects. Just as multiple voices of an audio device can enhance audio output, multiple haptic effect output devices can enhance haptic affect generation. Such a format may also be employed to provide directional haptic effect outputs along with a central or reinforcing haptic effect output, for example.

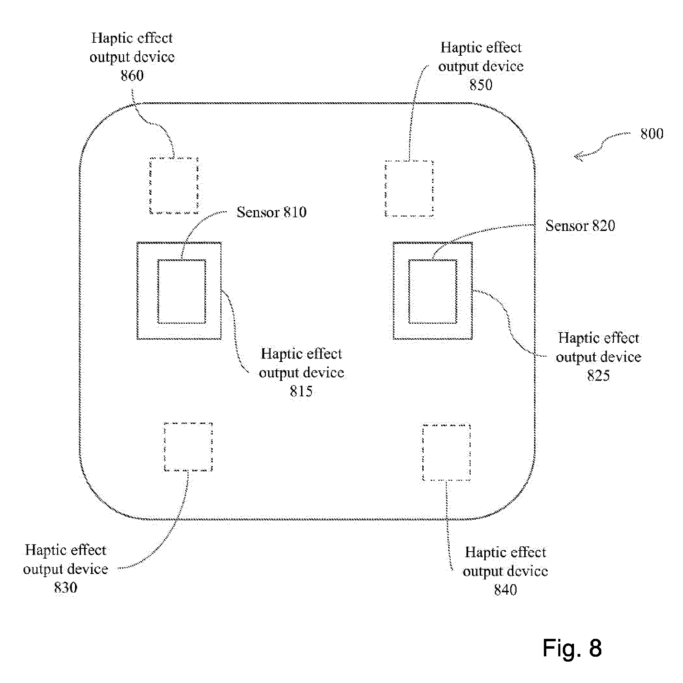

Various devices can incorporate the haptic effect architectures illustrated in Figures 2-7. Figure 8 illustrates an embodiment of a gaming controller. As illustrated device 800, a game controller, includes sensors 810 and 820 which are layered over haptic effect output devices 815 and 825. Thus, sensors 810 and 820 can detect input from a user while haptic effect output devices 815 and 825 can provide feedback specifically at the site of input from the user. Also provided are haptic effect output devices 830, 840, 850 and 860. These additional haptic effect output devices provide for different haptic effect outputs, such as providing vibration or vibrotactile outputs. The location of these output devices may vary depending on structures in a device such as device 800, but would typically be away from input sensors 810 and 820. Note that while it is not specifically illustrated, each of haptic effect output devices 815, 825, 830, 840, 850, and 860 have a corresponding controller as has been illustrated with Figures 2-7.

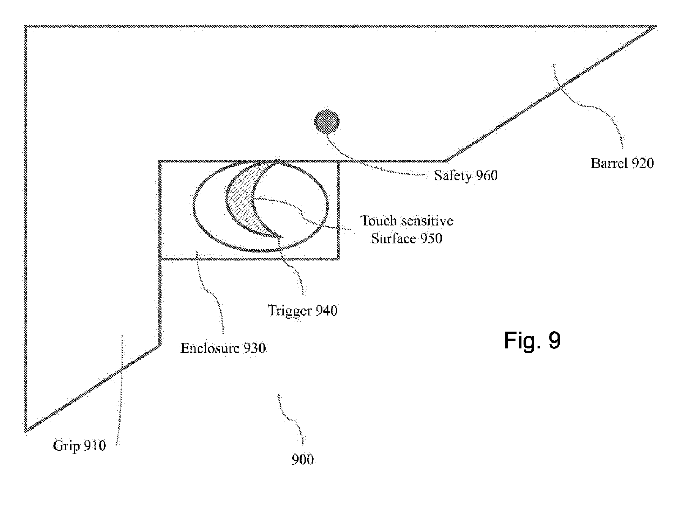

As another example of a device which may incorporate multiple controllers, Figure 9 illustrates an embodiment of a gun-shaped controller. Device 900 provides for a controller stylized as a pistol, with a barrel, grip, trigger and enclosure and safety. Grip 910 and barrel 920 provide basic elements of the pistol, and may include haptic effect output devices along with controllers (not shown). Enclosure 930 surrounds trigger 940 as a trigger guard, and trigger 940 includes a touch sensitive surface 950. Surface 950 may also embody a haptic effect output device and associated controller, too. Additionally, safety 960 provides a safety button using a touch sensitive surface and potentially also using a haptic effect output device and associated controller as well. Thus, one can sense input at the trigger surface 950 and the safety button surface 960, for example. One can also potentially manipulate these surfaces if they are haptic effect output devices such as stretch output devices. Thus, trigger surface 950 can be hardened or softened to simulate different types of guns with associated variations in triggers. Similarly, safety button 960 may be varied to simulate a depressed or raised button through use of stretch haptic effect output devices, for example.

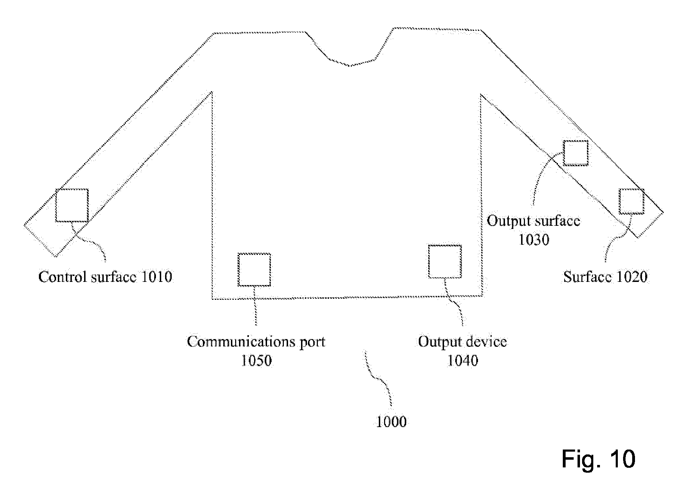

Wearables or garments may also be implemented with multiple controllers. Figure 10 illustrates an embodiment of a wearable device with haptic effects. Device 1000 provides a garment with control surfaces and haptic effect output devices. Control surface 1010 is a stretch sensor, which may be measured by a controller integral to the garment or in communication with the garment, for example. Surface 1020 provides a stretch sensor and haptic effect output device with associated controller, which provides for input and for haptic effect output which modifies the sensation of the control surface for the user. Device 1030 provides a haptic effect output device with associated controller which provides haptic effect output that a user may sense, for example. Device 1040 provides a haptic effect output device and associated controller which may be a stretch or nonstretch haptic output. Garment 1000 may also be expected to include communications port 1050 to allow for communication with other devices. Communications port 1050 may be expected to connect to or couple with controllers for surfaces or devices 1010, 1020, 1030 and 1040, for example. Moreover, multiple control surfaces, output surfaces, and other output devices may be included, for example, along with other types of input devices such as sensors, for example.

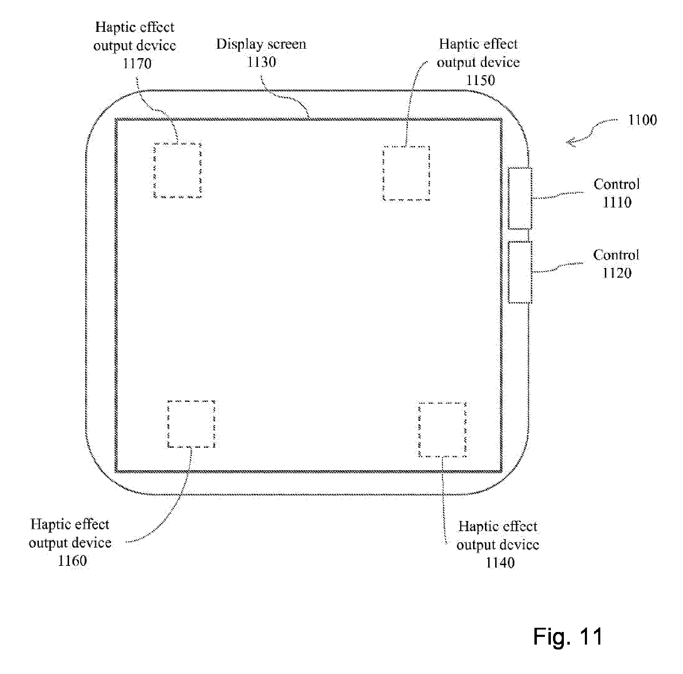

As another example of an embodiment, Figure 11 illustrates an embodiment of a tablet. Tablet 1100 includes controls 1110 and 1120 and display screen 1130. Also illustrated are haptic effect output devices 1140, 1150, 1160 and 1170. Each of the haptic effect output devices have a corresponding controller in a one-to-one relationship. Thus, the haptic effect output devices can be controlled by the individual controllers, and provide a variety of haptic effects for tablet 1100.

Note that various implementations and embodiments have been illustrated herein. Alternative embodiments may be provided with similar characteristics (such as a dedicated controller for each haptic effect output device). Moreover, more haptic effect output devices may be incorporated in designs with associated controllers. With these architectures and devices implementing these architectures, various processes can be used to execute effects with haptic effect output devices.

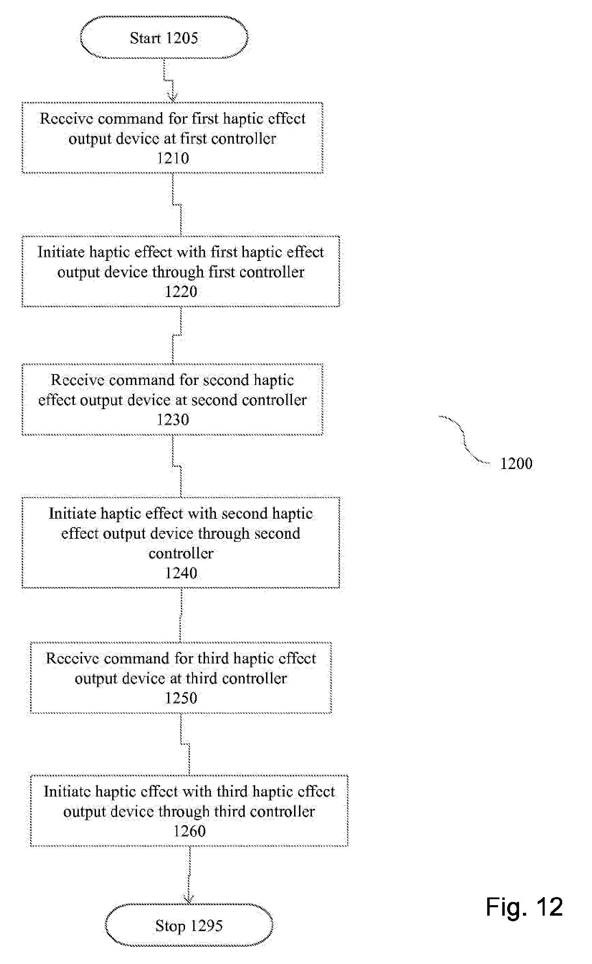

Figure 12 illustrates an embodiment of a process of operating haptic effect output devices with dedicated processors. Process 1200 provides a process of implementing haptic effects using haptic effect output devices with dedicated processors. Process 1200 and other processes referred to in this document are described as a set of modules, which may be executed or implemented in a variety of ways, whether by a preprogrammed machine, a specialized machine, or a set of machines, and which may be rearranged in order and in serial or parallel fashion within the context of the description.

Process 1200 initiates at module 1205 and receives a command at a first processor to execute a haptic effect with a first haptic effect output device at module 1210. The process initiates and executes the haptic effect using the first haptic effect output device responsive to control signals from the first processor at module 1220. This may involve a variety of initiation and ongoing signals depending on the type of haptic effect output device. This may also involve acknowledging the command by the first processor and potentially confirming execution of the haptic effect.

A second processor receives a command to execute a haptic effect at a second haptic effect output device at module 1230. The second processor causes the the second haptic effect output device to initiate and execute the haptic effect responsive to control signals from the second processor at module 1240. Similarly, a third processor receives a command to execute a haptic effect at a third haptic effect output device at module 1250. The third haptic effect output device initiates and executes the haptic effect responsive to control signals from the third processor at module 1260. The second and third processors may similarly provide responsive signals to confirm receipt of commands, accomplishment of tasks, etc.

One skilled in the art will appreciate that although specific examples and embodiments of the system and methods have been described for purposes of illustration, various modifications can be made without deviating from present invention. For example, embodiments of the present invention may be applied to many different types of objects or devices operating individually or in conjunction with other devices. Moreover, features of one embodiment may be incorporated into other embodiments, even where those features are not described together in a single embodiment within the present document.

## Claims

1. A haptic effect enabled apparatus comprising:
a plurality of haptic output devices;
and
a plurality of controllers, the plurality of controllers having one controller for each haptic output device of the plurality of haptic output devices, each controller of the plurality of controllers associated with a single haptic output device of the plurality of haptic output devices.

2. The apparatus of claim 1, wherein:
each controller of the plurality of controllers is connected to at least one other controller of the plurality of controllers.

3. The apparatus of claim 1, wherein:
each controller of the plurality of controllers is connected to each other controller of the plurality of controllers.

4. The apparatus of claim 1, further comprising:
a coordinating controller, the coordinating controller coupled to each controller of the plurality of controllers.

5. The apparatus of claim 4, further comprising:
an external communications interface coupled to the coordinating controller.

6. The apparatus of claim 1, further comprising:
an external communications interface coupled to at least one of the controllers of the plurality of controllers.

7. The apparatus of claim 6, wherein:
the external communications interface is selected from one of the group comprising electronic, cellular, wireless, wi-fi, optical, infrared, acoustic, Bluetooth, USB, Firewire, Thunderbolt or Ethernet.

8. The apparatus of claim 1, wherein:
each of the haptic output devices of the plurality of haptic output devices is selected from one of the group of an eccentric rotating mass, linear resonant actuator, a piezoelectric material, an electro-active polymer, a shape memory alloy, an electrostatic friction device, an ultrasonic surface friction device, an ultrasonic haptic transducer, a combination of a haptic substrate and a deformable surface, or an air jet.

9. The apparatus of claim 1 comprising:
a first haptic output device;
a first controller associated exclusively with the first haptic output device, the first controller coupled to the first haptic output device and to control the first haptic output device;
a second haptic output device;
a second controller associated exclusively with the second haptic output device, the second controller coupled to the second haptic output device and to control the second haptic output device;
a third haptic output device;
and
a third controller associated exclusively with the third haptic output device, the third controller coupled to the third haptic output device and to control the third haptic output device.

10. The apparatus of claim 9, further comprising:
a fourth haptic output device;
and
a fourth controller associated exclusively with the fourth haptic output device, the fourth controller coupled to the fourth haptic output device and to control the fourth haptic output device;
and
a fifth haptic output device;
and
a fifth controller associated exclusively with the fifth haptic output device, the fifth controller coupled to the fifth haptic output device and to control the fifth haptic output device.

11. A method of producing multiple haptic effects in a haptic effect enabled device, comprising:
receiving at a first controller of a plurality of controllers a command to enable a first haptic output device of a plurality of haptic output devices, the first haptic output device connected to the first controller;
producing a first haptic effect with the first haptic output device responsive to the first controller;
receiving at a second controller of the plurality of controllers a command to enable a second haptic output device of the plurality of haptic output devices, the second haptic output device connected to the second controller;
and
producing a second haptic effect with the second haptic output device responsive to the second controller.

12. The method of claim 11, further comprising:
receiving at a third controller a command to enable a third haptic output device, the third haptic output device connected to the third controller;
and
producing a third haptic effect with the third haptic output device responsive to the third controller.

13. The method of claim 12, further comprising:
receiving each of the command to enable the first haptic output device, the command to enable the second haptic output device and the command to enable the third haptic output device at a communications interface.

14. The method of claim 12, further comprising:
passing each of the command to enable the first haptic output device, the command to enable the second haptic output device and the command to enable the third haptic output device from the communications interface directly to each of the first controller, the second controller and the third controller.

15. The method of claim 12, further comprising:
passing each of the command to enable the first haptic output device, the command to enable the second haptic output device and the command to enable the third haptic output device from the communications interface directly to a coordinating controller;
and
passing each of the command to enable the first haptic output device, the command to enable the second haptic output device and the command to enable the third haptic output device from the coordinating controller to each of the first controller, the second controller and the third controller respectively.
